# EUROPEAN PATENT APPLICATION

(11) **EP 4 832 291 A1**
(43) Date of publication of application: **28.10.2026**
(21) Application number: 26169240.4
(22) Date of filing: 30.03.2026
(51) Int. Cl.: H02J 3/32, H02J 7/02

(54) **CHARGING AND DISCHARGING POWER REGULATION METHOD**

(30) Priority: 21.04.2025 CN 202510495339; 22.04.2025 CN 202510510990
(71) Applicant: Shanghai Sigeyuan Intelligent Technology Co., Ltd, Shanghai 201306 (CN)
(72) Inventor: LIU, Wenxin, Shanghai, 201306 (CN); ZHAN, Kailiang, Shanghai, 201306 (CN); WU, Donghao, Shanghai, 201306 (CN); GAO, Wenqiang, Shanghai, 201306 (CN)
(74) Representative: DREISS Patentanwälte PartG mbB

(57) **Abstract**

A charging and discharging power regulation method, including: determining a charging-discharging state of a DC-to-DC converter; comparing, based on the charging-discharging state of the DC-to-DC converter, a sum of a charging power of the DC-to-DC converter and an operating power of an AC load with an input power limit value of the grid connection point, or comparing a difference between a discharging power of the DC-to-DC converter and the operating power of the AC load with an output power limit value of the grid connection point; and adjusting an output power reference value of the DC-to-DC converter and an output power reference value of the grid-connected converter based on a comparison result.

## Description

### FIELD

The present disclosure relates to the field of power regulation technologies, and more particularly, to a charging and discharging power regulation method.

### BACKGROUND

With the popularization of electric vehicles, their charging issues have attracted increasing attention. DC charging piles can directly supply high-power direct current to batteries of the electric vehicles, greatly shortening charging time, which is particularly important for long-distance travelling and emergency situations requiring rapid power replenishment. At present, the technologies of charging piles are undergoing rapid development and transformation. Benefiting from the advantage of fast charging, DC fast-charging technology is gradually replacing the traditional AC slow-charging technology and gaining widespread popularity. However, residential DC charging piles impose higher requirements on residential power distribution systems, resulting in the following technical problems.
(1) To meet the high-power charging requirement of the DC charging pile, it is required to increase the current-carrying capacity of the residential power distribution system.
(2) When the power grid has insufficient capacity, high-power charging may cause voltage drop at the grid connection point, triggering an under-voltage shutdown and affecting charging continuity.
(3) Variations in AC loads may lead to unstable charging power, reducing charging efficiency of the electric vehicle.

These problems restrict efficient application of the DC charging piles and affect charging experience of electric vehicle users. Therefore, how to achieve efficient, rapid, and real-time charging of charging piles has become an urgent issue to be addressed in this field.

### SUMMARY

A main objective of the present disclosure is to overcome at least one of the above defects and to provide a charging and discharging power regulation method and a DC-to-DC converter system, which can not only improve charging-discharging efficiency of a power battery, but also reduce an impact on power grid stability during charging and discharging of the power battery.

To achieve the above objectives, technical solutions adopted in the present disclosure are as follows:
The present disclosure provides a charging and discharging power regulation method. A power battery is connected to a power grid via a DC-to-DC converter and a grid-connected converter. The DC-to-DC converter is connected to the grid-connected converter through a DC bus. The grid-connected converter is connected to the power grid at a grid connection point. An AC load is connected to the grid connection point. The method includes: determining a charging-discharging state of the DC-to-DC converter; comparing, when the DC-to-DC converter is in a charging state, a sum of a charging power of the DC-to-DC converter and an operating power of the AC load with an input power limit value of the grid connection point, and adjusting an output power reference value of the grid-connected converter and an output power reference value of the DC-to-DC converter based on a comparison result; and comparing, when the DC-to-DC converter is in a discharging state, a difference between a discharging power of the DC-to-DC converter and the operating power of the AC load with an output power limit value of the grid connection point, and adjusting the output power reference value of the DC-to-DC converter and the output power reference value of the grid-connected converter based on a comparison result.

According to some embodiments of the present disclosure, the method includes, when the DC-to-DC converter is in the charging state: in response to the sum of the charging power of the DC-to-DC converter and the operating power of the AC load being greater than the input power limit value of the grid connection point, inputting a difference between the input power limit value of the grid connection point and a real-time power of the grid connection point into a regulator to calculate the output power reference value of the grid-connected converter; and inputting a difference between a bus voltage reference value of the DC-to-DC converter and a real-time voltage of the DC bus into the regulator to calculate the output power reference value of the DC-to-DC converter.

According to some embodiments of the present disclosure, the method includes, when the DC-to-DC converter is in the charging state: in response to the sum of the charging power of the DC-to-DC converter and the operating power of the AC load being smaller than the input power limit value of the grid connection point, inputting a difference between a bus voltage reference value of the grid-connected converter and a real-time voltage of the DC bus into a regulator to calculate the output power reference value of the grid-connected converter; and controlling the DC-to-DC converter to adjust operation of the DC-to-DC converter by using a charging power limit value of the DC-to-DC converter as the output power reference value of the DC-to-DC converter.

According to some embodiments of the present disclosure, the bus voltage reference value of the grid-connected converter is greater than a bus voltage reference value of the DC-to-DC converter, when the DC-to-DC converter is in the charging state.

According to some embodiments of the present disclosure, the method includes, when the DC-to-DC converter is in the discharging state: in response to the difference between the discharging power of the DC-to-DC converter and the operating power of the AC load being greater than the output power limit value of the grid connection point, inputting a difference between the output power limit value of the grid connection point and a real-time power of the grid connection point into a regulator to calculate the output power reference value of the grid-connected converter; and inputting a difference between a bus voltage reference value of the DC-to-DC converter and a real-time voltage of the DC bus into the regulator to calculate the output power reference value of the DC-to-DC converter.

According to some embodiments of the present disclosure, the method includes, when the DC-to-DC converter is in the discharging state: in response to the difference between the discharging power of the DC-to-DC converter and the operating power of the AC load being smaller than the output power limit value of the grid connection point, inputting a difference between a bus voltage reference value of the grid-connected converter and a real-time voltage of the DC bus into a regulator to calculate the output power reference value of the grid-connected converter; and controlling the DC-to-DC converter to adjust operation of the DC-to-DC converter by using a discharging power limit value of the DC-to-DC converter as an output power of the DC-to-DC converter.

According to some embodiments of the present disclosure, the bus voltage reference value of the grid-connected converter is smaller than a bus voltage reference value of the DC-to-DC converter when the DC-to-DC converter is in the discharging state.

The present disclosure provides a DC-to-DC converter system configured to perform the above-described charging and discharging power regulation method to regulate a charging-discharging power between a power battery and a power grid.

According to some embodiments of the present disclosure, the DC-to-DC converter system includes a DC-to-DC converter, a grid-connected converter, a controller, and a power metering device. The power battery is connected to the power grid via the DC-to-DC converter and the grid-connected converter. The DC-to-DC converter is connected to the grid-connected converter through a DC bus. The grid-connected converter is connected to the power grid at a grid connection point. An AC load is connected to the grid connection point. The power metering device has an input terminal connected to the grid connection point, and an output terminal connected to an input terminal of the controller. The controller is connected to the DC-to-DC converter and the grid-connected converter, and is configured to adjust an output power reference value of the DC-to-DC converter and an output power reference value of the grid-connected converter based on a charging-discharging state of the DC-to-DC converter and an input-output power of the grid connection point.

According to some embodiments of the present disclosure, the controller includes a grid-connected converter control unit and a DC-to-DC converter control unit. The grid-connected converter control unit is connected to the grid-connected converter. The DC-to-DC converter control unit is connected to the DC-to-DC converter.

According to some embodiments of the present disclosure, the grid-connected converter control unit includes a grid-connected converter power upper limit control module, a grid-connected converter power lower limit control module, and a grid-connected converter bus voltage control module. The grid-connected converter power upper limit control module is configured to input a difference between an output power limit value of the grid connection point and a real-time power of the grid connection point into a regulator, and obtain an output of the grid-connected converter power upper limit control module through the regulator. The grid-connected converter power lower limit control module is configured to input a difference between an input power limit value of the grid connection point and the real-time power of the grid connection point into the regulator, and obtain an output of the grid-connected converter power lower limit control module through the regulator. The grid-connected converter bus voltage control module is configured to input a difference between a bus voltage reference value of the grid-connected converter and a DC bus real-time voltage into the regulator, and obtain an output of the grid-connected converter bus voltage control module through the regulator. The output of the grid-connected converter bus voltage control module is subjected to amplitude limiting processing to generate an output power reference value for adjusting and controlling the grid-connected converter.

According to some embodiments of the present disclosure, the DC-to-DC converter control unit includes a DC-to-DC converter bus voltage control module. The DC-to-DC converter bus voltage control module is configured to input a difference between a bus voltage reference value of the DC-to-DC converter and a DC bus real-time voltage into a regulator, and obtain an output of the DC-to-DC converter bus voltage control module through the regulator. The output of the DC-to-DC converter bus voltage control module is subjected to amplitude limiting processing to generate an output power reference value for adjusting and controlling the DC-to-DC converter.

Compared with the prior art, the charging and discharging power regulation method and the DC-to-DC converter system of the present disclosure have the following advantages and beneficial effects:
The charging and discharging power regulation method of the present disclosure dynamically adjusts the charging-discharging power of the DC-to-DC converter by means of a closed-loop control system through real-time monitoring of a power of the grid connection point and a voltage of the DC bus, in combination with the charging-discharging state of the DC-to-DC converter connected to the power battery. Thus, problems such as an impact of high-power charging on the power grid stability, energy scheduling delays caused by master-slave communication latency, low charging efficiency, and power control fluctuations can be overcome. In this way, operation stability of the DC-to-DC converter system can be ensured while improving DC charging-discharging efficiency.

The present disclosure further provides a charging-discharging control method for a photovoltaic power generation system, which can not only effectively improve a power response speed of the DC-to-DC converter, but also reduce investment of device costs, thus achieving a purpose of cost reduction and efficiency improvement.

To achieve the above objectives, the technical solutions adopted in the present disclosure are as follows:
The present disclosure provides a charging-discharging control method fora photovoltaic power generation system. The photovoltaic power generation system includes a DC-to-DC converter, a grid-connected converter, and an energy storage battery. The power battery is connected to a DC bus at a DC side of the grid-connected converter via the DC-to-DC converter, and the energy storage battery is connected to the DC bus at the DC side of the grid-connected converter via an energy storage converter. The charging-discharging control method includes the following operations: performing initial setting on a state-of-charge (SOC) reference value of the energy storage battery, and determining a base voltage based on a minimum DC bus voltage required for charging the DC-to-DC converter and the energy storage converter; determining, based on the base voltage, a bus voltage reference upper limit value of the DC-to-DC converter, a bus voltage reference value of the energy storage converter, and a bus voltage reference lower limit value of the DC-to-DC converter; collecting a voltage of the DC bus as a DC bus voltage value, collecting a real-time SOC value of the energy storage battery, comparing the DC bus voltage value with the bus voltage reference upper limit value of the DC-to-DC converter and the bus voltage reference lower limit value of the DC-to-DC converter, to determine the charging-discharging state of the DC-to-DC converter, and calculating a charging-discharging power of the DC-to-DC converter based on the SOC reference value and the real-time SOC value; and calculating a charging-discharging power of the energy storage converter based on the DC bus voltage value and the bus voltage reference value of the energy storage converter.

According to some embodiments of the present disclosure, the method includes adding different positive constants ***Δu*** to the base voltage, to determine the bus voltage reference upper limit value of the DC-to-DC converter, the bus voltage reference value of the energy storage converter, and the bus voltage reference lower limit value of the DC-to-DC converter. The bus voltage reference upper limit value of the DC-to-DC converter is greater than the bus voltage reference value of the energy storage converter, and the bus voltage reference value of the energy storage converter is greater than the bus voltage reference lower limit value of the DC-to-DC converter.

According to some embodiments of the present disclosure, the minimum DC bus voltage value required for charging the DC-to-DC converter and the energy storage converter and for determining the base voltage is a sum of a minimum voltage required for charging the DC-to-DC converter and a minimum voltage required for charging the energy storage converter.

According to some embodiments of the present disclosure, the positive constant ***Δu*** is a constant between a minimum allowable voltage value and a maximum allowable voltage value of the DC bus.

According to some embodiments of the present disclosure, the comparing the DC bus voltage value with the bus voltage reference upper limit value of the DC-to-DC converter and the bus voltage reference lower limit value of the DC-to-DC converter to determine the charging-discharging state of the DC-to-DC converter includes: when the DC bus voltage value is higher than the bus voltage reference upper limit value of the DC-to-DC converter, determining that the DC-to-DC converter forcibly performs a charging operation; when the DC bus voltage value is lower than the bus voltage reference lower limit value of the DC-to-DC converter, determining that the DC-to-DC converter forcibly performs a discharging operation; when the DC bus voltage value is between the bus voltage reference upper limit value of the DC-to-DC converter and the bus voltage reference lower limit value of the DC-to-DC converter, determining that the DC-to-DC converter performs a charging operation or a discharging operation.

According to some embodiments of the present disclosure, when the DC bus voltage value is higher than the bus voltage reference upper limit value of the DC-to-DC converter, determining that the DC-to-DC converter performs a charging operation at a maximum charging power of the DC-to-DC converter, and the energy storage converter performs a charging operation at a maximum charging power of the energy storage converter; or when the DC bus voltage value is lower than the bus voltage reference lower limit value of the DC-to-DC converter, determining that the DC-to-DC converter performs a discharging operation at a maximum discharging power of the DC-to-DC converter, and the energy storage converter performs a discharging operation at a maximum discharging power of the energy storage converter.

According to some embodiments of the present disclosure, when the DC bus voltage value is between the bus voltage reference upper limit value of the DC-to-DC converter and the bus voltage reference lower limit value of the DC-to-DC converter, the charging-discharging state of the DC-to-DC converter is determined by comparing the SOC reference value with the real-time SOC value. When the SOC reference value is equal to the real-time SOC value, it is determined that the DC-to-DC converter performs charging or discharging based on an energy surplus or an energy deficit on the DC bus. The DC-to-DC converter performs charging only when there is surplus photovoltaic power, and performs discharging when the power deficit exists on the DC bus. When the SOC reference value is not equal to the real-time SOC value, it is determined that the DC-to-DC converter performs charging or discharging prior to the energy storage converter. In an exemplary embodiment of the present disclosure, when the SOC reference value is smaller than the real-time SOC value, it is determined that the DC-to-DC converter performs charging prior to the energy storage converter; and when the SOC reference value is greater than the real-time SOC value, it is determined that the DC-to-DC converter performs discharging prior to the energy storage converter.

According to some embodiments of the present disclosure, the calculating the charging-discharging power of the DC-to-DC converter based on the SOC reference value and the real-time SOC value includes: calculating the charging-discharging power of the DC-to-DC converter through a regulator, where an intermediate value of the charging-discharging power of the DC-to-DC converter is calculated by using the SOC reference value as an input to the regulator and the real-time SOC value as a feedback; and performing amplitude limiting processing on the intermediate value of the charging-discharging power of the DC-to-DC converter to obtain the charging-discharging power of the DC-to-DC converter.

According to some embodiments of the present disclosure, the amplitude limiting processing is performed on the charging-discharging power of the DC-to-DC converter through an amplitude limiter, and an upper amplitude limit and a lower amplitude limit of the amplitude limiter are determined by: calculating an upper voltage limit loop output power reference value of the DC-to-DC converter by using the bus voltage reference upper limit value of the DC-to-DC converter as an input and the DC bus voltage value as a feedback, and determining the upper voltage limit loop output power reference value as the upper amplitude limit; or calculating a lower voltage limit loop output power reference value of the DC-to-DC converter by using the bus voltage reference lower limit value of the DC-to-DC converter as an input and the DC bus voltage value as a feedback, and determining the lower voltage limit loop output power reference value as the lower amplitude limit.

According to some embodiments of the present disclosure, a charging-discharging state of the energy storage converter is determined based on the DC bus voltage value and the bus voltage reference value of the energy storage converter. When the DC bus voltage value is equal to the bus voltage reference value of the energy storage converter, it is determined that the energy storage converter performs a charging operation or a discharging operation. When the DC bus voltage value is greater than the bus voltage reference value of the energy storage converter, it is determined that the energy storage converter performs charging. When the DC bus voltage value is smaller than the bus voltage reference value of the energy storage converter, it is determined that the energy storage converter performs discharging.

According to some embodiments of the present disclosure, when the DC bus voltage value is greater than the bus voltage reference value of the energy storage converter, it is determined that the energy storage converter performs the charging operation. When the DC bus voltage value is smaller than the bus voltage reference value of the energy storage converter, it is determined that the energy storage converter performs the discharging operation.

According to some embodiments of the present disclosure, the calculating the charging-discharging power of the energy storage converter based on the DC bus voltage value and the bus voltage reference value of the energy storage converter includes: calculating the charging-discharging power of the energy storage converter through the regulator by using the bus voltage reference value of the energy storage converter as an input and the DC bus voltage value as a feedback.

Compared with the prior art, the method for the charging-discharging control of the photovoltaic power generation system of the present disclosure has the following advantages and beneficial effects:
The charging-discharging control method of the present disclosure generates the bus voltage reference value of each DC-to-DC converter and the bus voltage reference value of the energy storage converter based on bus voltage requirements during operation of each DC-to-DC converter and the energy storage converter in the photovoltaic power generation system. In combination with real-time detection of the voltage of the DC bus, a comparison is performed to determine the charging-discharging state of the DC-to-DC converter. In this way, a response speed of the DC-to-DC converter is improved while ensuring charging-discharging stability of the DC-to-DC converter, thus effectively avoiding an impact of photovoltaic and load disturbances.

In addition, the charging-discharging control method of the present disclosure may be directly performed by the DC-to-DC converter, the energy storage converter, a photovoltaic converter or a controller in the grid-connected converter, without additional EMS energy management device, thus effectively saving device costs. Also, subsequent to calculation, issuing a control instruction directly enables the DC-to-DC converter and the energy storage converter to operate at an obtained target charging-discharging power, improving the response speed.

### BRIEF DESCRIPTION OF THE DRAWINGS

Some specific embodiments of the present disclosure will be described below in detail with reference to the accompanying drawings in an exemplary rather than restrictive manner. In the accompanying drawings, same or similar components or parts are denoted by same reference numerals. It should be understood by those skilled in the art that these accompanying drawings are not necessarily drawn to scale. In the accompanying drawings:
FIG. 1 is a schematic flowchart of a charging and discharging power regulation method according to an embodiment of the present disclosure;
FIG. 2 is a schematic structural diagram of a DC-to-DC converter system according to an embodiment of the present disclosure;
FIG. 3 is a schematic structural diagram of modules of a grid-connected converter control unit according to an embodiment of the present disclosure;
FIG. 4 is a schematic structural diagram of modules of a DC-to-DC converter control unit according to an embodiment of the present disclosure;
FIG. 5 is a schematic diagram of an energy flow relationship of a charging and discharging power regulation method in a charging scenario according to an embodiment of the present disclosure;
FIG. 6 is a schematic diagram of an energy flow relationship of a charging and discharging power regulation method in a discharging scenario according to an embodiment of the present disclosure;
FIG. 7 is a schematic structural diagram of a photovoltaic power generation system according to an embodiment of the present disclosure;
FIG. 8 is a schematic diagram of a calculation module for a charging-discharging power of a DC-to-DC converter according to an embodiment of the present disclosure;
FIG. 9 is a schematic diagram of a calculation module for a final power reference value of a DC-to-DC converter according to an embodiment of the present disclosure;
FIG. 10 is a schematic diagram of a calculation module for a charging-discharging power of an energy storage converter according to an embodiment of the present disclosure;
FIG. 11 is a schematic diagram of an energy flow relationship of a photovoltaic power generation system of a charging-discharging control method under an operating condition 1 according to an embodiment of the present disclosure;
FIG. 12 is a schematic diagram of an energy flow relationship of a photovoltaic power generation system of a charging-discharging control method under an operating condition 2 according to an embodiment of the present disclosure;
FIG. 13 is a schematic diagram of an energy flow relationship of a photovoltaic power generation system of a charging-discharging control method under an operating condition 3-1 according to an embodiment of the present disclosure;
FIG. 14 is a schematic diagram of an energy flow relationship of a photovoltaic power generation system of a charging-discharging control method under an operating condition 3-2 according to an embodiment of the present disclosure;
FIG. 15 is a schematic diagram of an energy flow relationship of a photovoltaic power generation system of a charging-discharging control method under an operating condition 4-1 according to an embodiment of the present disclosure;
FIG. 16 is a schematic diagram of an energy flow relationship of a photovoltaic power generation system of a charging-discharging control method under an operating condition 4-2 according to an embodiment of the present disclosure;
FIG. 17 is a schematic diagram of an energy flow relationship of a photovoltaic power generation system of a charging-discharging control method under an operating condition 5-1 according to an embodiment of the present disclosure; and
FIG. 18 is a schematic diagram of an energy flow relationship of a photovoltaic power generation system of a charging-discharging control method under an operating condition 5-2 according to an embodiment the present disclosure.

### DETAILED DESCRIPTION OF THE EMBODIMENTS

Technical solutions of the present disclosure will be described clearly and completely in conjunction with accompanying drawings. Obviously, the embodiments described here are only part of the embodiments of the present disclosure and are not all embodiments of the present disclosure. Based on the embodiments of the present disclosure, other embodiments obtained by those skilled in the art without creative labor are within scope of the present disclosure.

In addition, the technical features involved in the different embodiments of the present disclosure described below may be combined with each other as long as no conflict exists among such features.

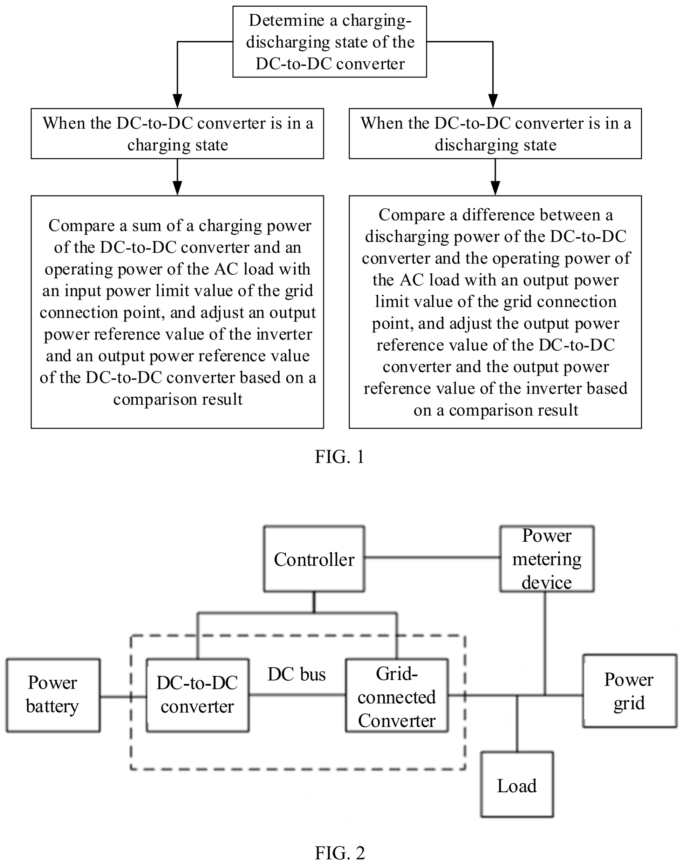

In an embodiment, a charging and discharging power regulation method is provided. The method is applicable to a DC-to-DC converter system. A structure of the DC-to-DC converter system is shown in FIG. 2. A power battery is connected to a power grid via a DC-to-DC converter and a grid-connected converter. The DC-to-DC converter is connected to the grid-connected converter through a DC bus. The grid-connected converter is connected to the power grid at a grid connection point. An AC load is connected to the grid connection point. An operating flow of the method is shown in FIG. 1.

The method includes: determining a charging-discharging state of the DC-to-DC converter; comparing, when the DC-to-DC converter is in a charging state, a sum of a charging power of the DC-to-DC converter and an operating power of the AC load with an input power limit value of the grid connection point, and adjusting an output power reference value of the grid-connected converter and an output power reference value of the DC-to-DC converter based on a comparison result; and comparing, when the DC-to-DC converter is in a discharging state, a difference between a discharging power of the DC-to-DC converter and the operating power of the AC load with an output power limit value of the grid connection point, and adjusting the output power reference value of the DC-to-DC converter and the output power reference value of the grid-connected converter based on a comparison result.

The method described in this embodiment dynamically adjusts the charging and discharging power of the DC-to-DC converter by means of a closed-loop control system through real-time monitoring of a power of the grid connection point and a voltage of the DC bus, in combination with the charging-discharging state of the DC-to-DC converter connected to the power battery. Thus, problems such as an impact of high-power charging on power grid stability, energy scheduling delays caused by master-slave communication latency, low charging efficiency, and power control fluctuations can be overcome. In this way, operation stability of the DC-to-DC converter system can be ensured while improving DC charging and discharging efficiency.

Based on whether the DC-to-DC converter is in the charging state or in the discharging state, and in combination with the operating power of the DC-to-DC converter and the operating power of the alternating-current load, a sum of the operating power of the DC-to-DC converter and the operating power of the alternating-current load or a difference between the operating power of the DC-to-DC converter and the operating power of the alternating-current load is compared with the input power limit value or the output power limit value of the grid connection point, and operation modes and power of the grid-connected converter and the DC-to-DC converter are determined based on the comparison result.

In some embodiments, when the DC-to-DC converter is in the charging state, a bus voltage reference value of the grid-connected converter is greater than a bus voltage reference value of the DC-to-DC converter, and the control logic is as follows:
in response to the sum of the charging power of the DC-to-DC converter and the operating power of the AC load being greater than the input power limit value of the grid connection point, the output power reference value of the grid-connected converter is calculated by using a difference between the input power limit value of the grid connection point and a real-time power of the grid connection point as an input to a regulator, and the output power reference value of the DC-to-DC converter is calculated by using a difference between the bus voltage reference value of the DC-to-DC converter and a real-time voltage of the DC bus as an input to the regulator;
in response to the sum of the charging power of the DC-to-DC converter and the operating power of the AC load being smaller than the input power limit value of the grid connection point, the output power reference value of the grid-connected converter is calculated by using a difference between the bus voltage reference value of the grid-connected converter and the real-time voltage of the DC bus as an input to the regulator, and the DC-to-DC converter is controlled to adjust operation of the DC-to-DC converter by using a charging power limit value of the DC-to-DC converter as the output power reference value of the DC-to-DC converter; and
in response to the sum of the charging power of the DC-to-DC converter and the operating power of the AC load being equal to the input power limit value of the grid connection point, no regulation is performed.

In some embodiments, when the DC-to-DC converter is in the discharging state, the bus voltage reference value of the grid-connected converter is smaller than the bus voltage reference value of the DC-to-DC converter, and the control logic is as follows:
in response to the difference between the discharging power of the DC-to-DC converter and the operating power of the AC load being greater than the output power limit value of the grid connection point, the output power reference value of the grid-connected converter is calculated by using a difference between the output power limit value of the grid connection point and the real-time power of the grid connection point as an input to the regulator, and the output power reference value of the DC-to-DC converter is calculated by using a difference between the bus voltage reference value of the DC-to-DC converter and the real-time voltage of the DC bus as an input to the regulator;
in response to the difference between the discharging power of the DC-to-DC converter and the operating power of the AC load being smaller than the output power limit value of the grid connection point, the output power reference value of the grid-connected converter is calculated by using the difference between the bus voltage reference value of the grid-connected converter and the real-time voltage of the DC bus as an input to the regulator, and the DC-to-DC converter is controlled to adjust the operation of the DC-to-DC converter by using the discharging power limit value of the DC-to-DC converter as the output power of the DC-to-DC converter; and
in response to the difference between the discharging power of the DC-to-DC converter and the operating power of the AC load being equal to the output power limit value of the grid connection point, no regulation is performed.

The bus voltage reference value BusRef_dcac of the grid-connected converter and the bus voltage reference value BusRef_dcdc of the DC-to-DC converter above are related to a voltage request value of the DC bus and a state of the DC-to-DC converter. The expressions are as follows: $BusRef_dcac = BusReq + Δ {V}_{1} ;$ $BusRef_dcdc = BusReq + Δ {V}_{2} ;$ where BusReq represents a voltage request value of the DC bus; and ΔV₁ and ΔV₂ represent regulation amounts that enable the bus voltage reference value of the grid-connected converter and the bus voltage reference value of the DC-to-DC converter to meet the voltage request value of the DC bus. Each of ΔV₁ and ΔV₂ is greater than 0. When the DC-to-DC converter is in the charging state, ΔV₁ > ΔV₂ ; and when the DC-to-DC converter is in the discharging state, ΔV₁ < ΔV₂. Thus, corresponding to the above description: when the DC-to-DC converter is in the charging state, the bus voltage reference value of the grid-connected converter is greater than the bus voltage reference value of the DC-to-DC converter; when the DC-to-DC converter is in the discharging state, the bus voltage reference value of the grid-connected converter is smaller than the bus voltage reference value of the DC-to-DC converter.

The voltage request value BusReq of the DC bus is determined by a greater one of a DC bus request value BusReq_dcac of the grid-connected converter and a bus request value BusReq_dcdc of the DC-to-DC converter. The expression is as follows: $BusReq = max \left(BusReq_dcac, BusReq_dcdc\right) .$

The DC bus request value BusReq_dcac of the grid-connected converter is determined by a grid-side rated voltage, and the expression is as follows: $BusReq_dcac = {U}_{n} ∗ \sqrt{2} + {ΔV}_{3} ,$ where Uₙ represents the grid-side rated voltage; and ΔV₃ represents a regulation amount for ensuring normal operation of the grid-connected converter, which is generally a constant greater than 0.

The bus request value BusReq_dcdc of the DC-to-DC converter is determined by the voltage of the power battery, and the expression is as follows: $BusReq_dcac = VoltBat + Δ {V}_{4} ,$ where VoltBat represents the voltage of the power battery; and ΔV₄ may be either positive or negative. For a step-down DC-to-DC converter, ΔV₄ is positive. For a step-up DC-to-DC converter, ΔV₄ is negative. For a buck-boost DC-to-DC converter, ΔV₄ is negative when the DC-to-DC converter is operating in a step-up mode, and ΔV₄ is positive when the DC-to-DC converter is operating in a step-down mode.

In the above embodiments, the output power is calculated by using the regulator. The regulator employed may be a common PI regulator, a PD regulator, an adaptive regulator, etc. A power is calculated by controlling the input of the regulator.

An input/output power of the grid-connected converter has an upper limit and a lower limit. An upper power limit PwrUplimit_dcac of the grid-connected converter is obtained through the regulator by using a difference between an output power limit value PwrUpRef of the grid connection point and a real-time power PwrFdb of the grid connection point as inputs to the regulator, where the output power limit value PwrUpRef of the grid connection point is a maximum power limit value fed to the power grid. A lower power limit value PwrDnLimit_dcac of the grid-connected converter is obtained through the regulator by using a difference between an input power limit value PwrDnRef of the grid connection point and the real-time power PwrFdb of the grid connection point as an input to the regulator, where the input power limit value PwrDnRef of the grid connection point is a maximum power limit value absorbed from the power grid. When the output power reference value PwrRef_dcac of the grid-connected converter is calculated by using the difference between the bus voltage reference value BusRef_dcac of the grid-connected converter and the real-time voltage BusFdb of the DC bus as an input the regulator, amplitude limiting processing is performed by using the obtained upper power limit and the obtained lower power limit of the grid-connected converter, to obtain a final output power reference value PwrRef_dcac of the grid-connected converter.

An output power BusOut_dcdc of the DC-to-DC converter is obtained through the regulator by using the difference between the bus voltage reference value BusRef_dcdc of the DC-to-DC converter and the real-time voltage BusFdb of the DC bus as the input to the regulator. The output power BusOut_dcdc of the DC-to-DC converter is also subjected to the amplitude limiting processing with an upper power limit PwrUplimit_dcdc and a lower power limit PwrDnlimit_dcdc of the DC-to-DC converter, to generate an output power value PwrRef_dcdc for adjusting and controlling the DC-to-DC converter. The upper power limit PwrUplimit_dcdc of the DC-to-DC converter is a maximum charging power limit value of the DC-to-DC converter, i.e., a maximum power limit value fed to the power battery. The lower power limit PwrDnlimit_dcdc of the DC-to-DC converter is a maximum discharging power limit value of the DC-to-DC converter, i.e., a maximum power limit value absorbed from the power battery.

The upper power limit of the DC-to-DC converter is a minimum value among a rated charging power of the DC-to-DC converter, an operating derated (such as temperature derating, etc.) power of the DC-to-DC converter, and a charging request power of the power battery. The charging request power of the power battery refers to a maximum allowable power of the power battery during charging, which is determined through communication between an electric vehicle and the DC-to-DC converter. The lower power limit of the DC-to-DC converter is a minimum value among a rated discharging power of the DC-to-DC converter, the operating derated (such as temperature derating, etc.) power of the DC-to-DC converter, and a discharging request power of the power battery. The discharging request power of the power battery refers to a maximum allowable power of the power battery during discharging, which is determined through communication between a device to which the power battery belongs and the DC-to-DC converter.

A DC-to-DC converter system is provided according to an embodiment. As illustrated in FIG. 2, the DC-to-DC converter system includes a DC-to-DC converter, a grid-connected converter, a controller, and a power metering device. The power battery is connected to the power grid via the DC-to-DC converter and the grid-connected converter. The DC-to-DC converter is connected to the grid-connected converter through a DC bus. The grid-connected converter is connected to the power grid at a grid connection point. An AC load is connected to the grid connection point. The power metering device has an input terminal connected to the grid connection point, and an output terminal connected to an input terminal of the controller. The controller is connected to the DC-to-DC converter and the grid-connected converter, and is configured to adjust an output power reference value of the DC-to-DC converter and an output power reference value of the grid-connected converter based on a charging-discharging state of the DC-to-DC converter and an input/output power of the grid connection point.

The DC-to-DC converter system in this embodiment is configured to perform the charging and discharging power regulation method described above to regulate a charging and discharging power between a power battery and a power grid.

In an embodiment, the controller includes a grid-connected converter control unit and a DC-to-DC converter control unit. The grid-connected converter control unit is connected to the grid-connected converter. The DC-to-DC converter control unit is connected to the DC-to-DC converter.

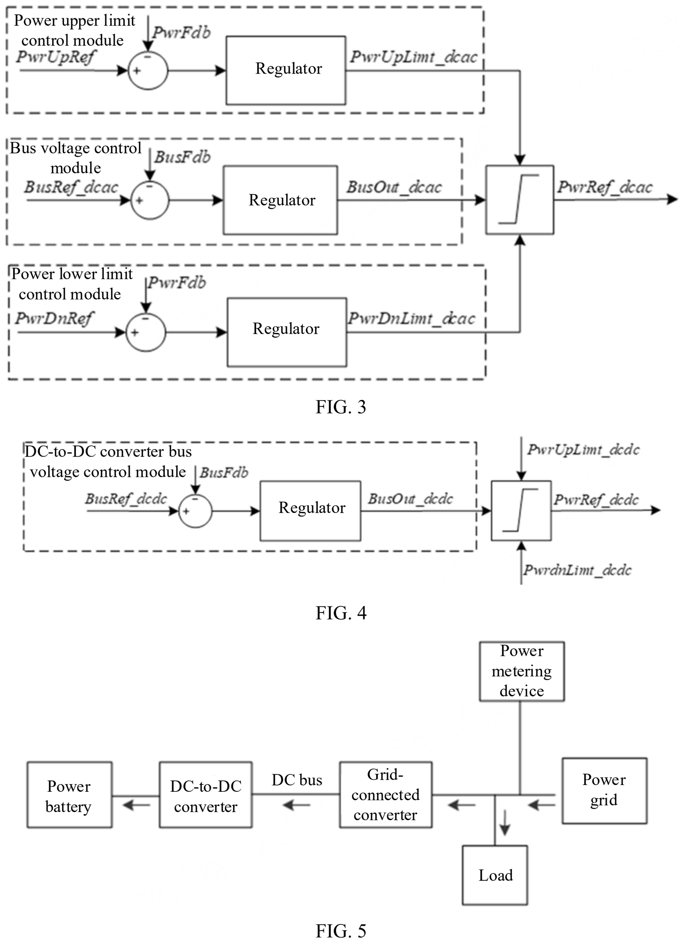

In an embodiment, as illustrated in FIG. 3, the grid-connected converter control unit includes a grid-connected converter power upper limit control module, a grid-connected converter power lower limit control module, and a grid-connected converter bus voltage control module. The grid-connected converter power upper limit control module uses the difference between the output power limit value PwrUpRef of the grid connection point and the real-time power PwrFdb of the grid connection point as an input to the regulator, and obtains an output of the grid-connected converter power upper limit control module through the regulator. The grid-connected converter power lower limit control module uses the difference between the input power limit value PwrDnRef of the grid connection point and the real-time power PwrFdb of the grid connection point as an input to the regulator, and obtains an output of the grid-connected converter power lower limit control module through the regulator. The grid-connected converter bus voltage control module uses the difference between the bus voltage reference value BusRef_dcac of the grid-connected converter and the real-time voltage BusFdb of the DC bus as an input to the regulator, and obtains an output BusOut_dcac of the grid-connected converter bus voltage control module through the regulator. The output BusOut_dcac of the grid-connected converter bus voltage control module is subjected to amplitude limiting processing to generate an output power reference value PwrRef_dcac for adjusting and controlling the grid-connected converter.

As illustrated in FIG. 4, the DC-to-DC converter control unit includes a DC-to-DC converter bus voltage control module. The DC-to-DC converter bus voltage control module uses the difference between the bus voltage reference value BusRef_dcdc of the DC-to-DC converter and the real-time voltage BusFdb of the DC bus as an input to the regulator, and obtains an output BusOut_dcdc of the DC-to-DC converter bus voltage control module through the regulator. The output BusOut_dcdc of the DC-to-DC converter bus voltage control module is subjected to amplitude limiting processing to generate an output power reference value PwrUpLimit_dcdc for adjusting and controlling the DC-to-DC converter.

The charging and discharging power regulation method and the DC-to-DC converter system in the present disclosure dynamically adjust the charging and discharging power of the DC-to-DC converter by means of the closed-loop control system through the real-time monitoring of the power of the grid connection point and the voltage of the DC bus. Operations are as follows.
(1) Data collection: the power of the grid connection point power and the voltage of the DC bus are collected in real time, and the collected power and voltage are inputted into the controller.
(2) Controller adjustment: the controller dynamically adjusts a state of the controller based on the charging and discharging power of the DC-to-DC converter, a power of a AC load, and the input power limit value and the output power limit value of the grid connection point, to determine the output power reference value of the grid-connected converter and the output power reference value of the DC-to-DC converter.
(3) Power control: The calculated output power reference value of the grid-connected converter and the calculated output power reference value of the DC-to-DC converter are respectively inputted into a power control module in the grid-connected converter and a power control module in the DC-to-DC converter, PWM waveforms are generated by respective power control modules, and an output power of the grid-connected converter and an output power of the DC-to-DC converter are thus precisely controlled.

### Operating Example 1: Charging Scenario

In a charging scenario, energy flows from the DC bus into the power battery via the DC-to-DC converter, with the power battery being in a charging state. Energy of the DC bus comes from the power grid, and grid energy flows into the DC bus through the grid-connected converter. An energy flow direction in this case is illustrated in FIG. 5.

When the sum of the charging power of the DC-to-DC converter and the power of the AC load is greater than the input power limit value of the grid connection point, the controller is in State 1, in which the controller inputs the difference between the input power limit value of the grid connection point and the real-time power of the grid connection point into the regulator to calculate the output power reference value of the grid-connected converter, and inputs the difference between the bus voltage reference value of the DC-to-DC converter and the real-time voltage of the DC bus into the regulator to calculate the output power reference value of the DC-to-DC converter. In other words, a power reference value of the grid-connected converter is controlled by the grid-connected converter power lower limit control module, and a power reference value of the DC-to-DC converter is controlled by the DC-to-DC converter bus voltage control module. In this case, an intermediate DC bus voltage is controlled by the DC-to-DC converter.

When the sum of the charging power of the DC-to-DC converter and the power of the AC load is smaller than the input power limit value of the grid connection point, the controller is in State 2, in which the controller inputs the difference between the bus voltage reference value of the grid-connected converter and the real-time voltage of the DC bus into the regulator to calculate the output power reference value of the grid-connected converter, and control the DC-to-DC converter to adjust the operation of the DC-to-DC converter by using the charging power limit value of the DC-to-DC converter as the output power reference value of the DC-to-DC converter. In other words, the power reference value of the grid-connected converter is controlled by the grid-connected converter bus voltage control module, and the power reference value of the DC bus is controlled by a DC-to-DC converter power upper limit control module. In this case, the intermediate DC bus voltage is controlled by the grid-connected converter.

### Operating Example 2: Discharging Scenario:

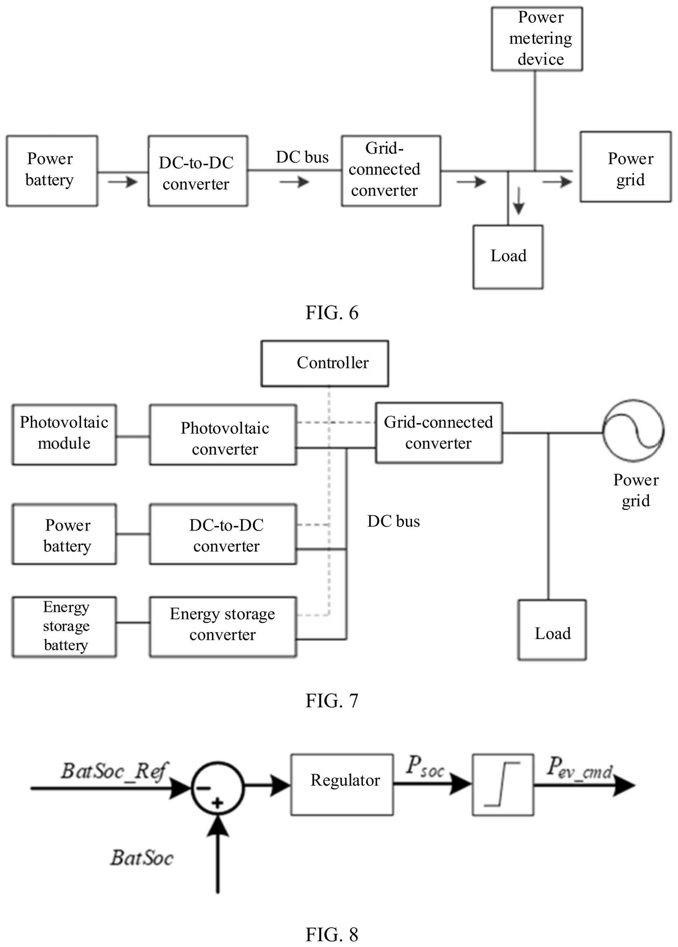

In a discharging scenario, the energy flows from the power battery into the DC bus via the DC-to-DC converter, with the power battery in a discharging state. The energy of the DC bus can be outputted to the power grid through the grid-connected converter or used to supply power to the AC load. An energy flow direction at this time is illustrated in FIG. 6.

When a difference between the discharging power of the DC-to-DC converter and the power of the AC load is greater than the output power limit value of the grid connection point, the controller is in State 3, in which the controller inputs the difference between the output power limit value of the grid connection point and the real-time power of the grid connection point into the regulator to calculate the output power reference value of the grid-connected converter, and inputs the difference between the bus voltage reference value of the DC-to-DC converter and the real-time voltage of the DC bus into the regulator to calculate the output power reference value of the DC-to-DC converter. In other words, the power reference value of the grid-connected converter is controlled by the grid-connected converter power upper limit control module, and the power reference value of the DC-to-DC converter is controlled by the DC-to-DC converter bus voltage control module. In this case, the intermediate DC bus voltage is controlled by the DC-to-DC converter.

When the difference between the discharging power of the DC-to-DC converter and the power of the AC load is smaller than the output power limit value of the grid connection point, the controller is in State 4, in which the controller inputs the difference between the bus voltage reference value of the grid-connected converter and the real-time voltage of the DC bus into the regulator to calculate the output power reference value of the grid-connected converter, and control the DC-to-DC converter to adjust the operation of the DC-to-DC converter by using the discharging power limit value of the DC-to-DC converter as the output power of the DC-to-DC converter. In other words, the power reference value of the grid-connected converter is controlled by the grid-connected converter bus voltage control module, and the power reference value of the DC bus is controlled by a DC-to-DC converter power lower limit control module. In this case, the intermediate DC bus voltage is controlled by the grid-connected converter.

With the advancement of renewable energy technologies and the popularization of new energy vehicles, integrating charging piles into a photovoltaic-storage system to construct an integrated photovoltaic power generation system can not only effectively alleviate the impact of the charging piles on the power grid, but also improve the self-consumption rate of household power generation, thus achieving significant economic benefits. However, such integrated photovoltaic power generation systems also face new challenges. Due to similarity in power demand and operating characteristics between the DC-to-DC converter and the energy storage converter in the photovoltaic power generation system, the DC-to-DC converter and the energy storage converter compete with each other in overall power distribution of the system. Especially under conditions such as fluctuating photovoltaic output, a sudden increase in the charging demand, or limited system power capacity, power distribution conflicts are prone to occur, which affects stable operation of the system. Therefore, how to determine a charging-discharging priority between the DC-to-DC converter and the energy storage converter in the photovoltaic power generation system and improve a power response speed of the charging piles has become an urgent problem to be solved.

A common technical solution to the above problem of "charging-discharging priority between the DC-to-DC converter and the energy storage converter" is to add a local energy management unit, which is connected to communication modules of a photovoltaic converter, the energy storage converter, and the DC-to-DC converter, to obtain information such as a photovoltaic power, the power of the grid connection point, an energy storage available charging power, and an energy storage available discharging power, and to determine whether to enable DC-to-DC converter charging and calculate an available charging power instruction for the DC-to-DC converter. Subsequently, the DC-to-DC converter performs charging based on a commanded power. This solution has two drawbacks:
(1) an EMS energy management device is required, and independent hardware of the EMS energy management device increases system costs; and
(2) since the EMS communicates with each component, a control delay is significant, making it difficult for the system to achieve both response speed and stability. Due to photovoltaic and load disturbances, errors exist in the calculated charging power instruction, resulting in poor control accuracy.

Therefore, a new control method is required to solve the problem of charging-discharging priority between the DC-to-DC converter and the energy storage converter in a simple and effective manner.

A photovoltaic power generation system in this embodiment is a DC-coupled photovoltaic-storage-charging system, in which each converter is DC-coupled via the DC bus within the photovoltaic power generation system. As illustrated in FIG. 7, the photovoltaic power generation system may include a power battery, a DC-to-DC converter, a grid-connected converter, an energy storage battery, an energy storage converter, a photovoltaic module, and a photovoltaic converter. The power battery is connected to the DC bus at a DC side of the grid-connected converter via the DC-to-DC converter. The energy storage battery is connected to the DC bus at the DC side of the grid-connected converter via the energy storage converter. The photovoltaic module is also connected to the DC bus at the DC side of the grid-connected converter via the photovoltaic converter. An AC side of the grid-connected converter is connected to the power grid and a load. The grid-connected converter is a bidirectional converter used for energy exchange between the power grid and the DC bus. The photovoltaic converter is a unidirectional converter used for energy exchange between the photovoltaic module and the DC bus. The energy storage converter is a bidirectional converter used for energy exchange between the energy storage battery and the DC bus. The DC-to-DC converter is a bidirectional converter used for energy exchange between the power battery and the DC bus.

A charging-discharging control method for a photovoltaic power generation system in this embodiment may be performed by an independent controller. As illustrated in FIG. 7, the controller may perform unified management on the DC-to-DC converter, the grid-connected converter, the energy storage converter, and the photovoltaic converter for multi-device operating scenarios of the photovoltaic power generation system, to manage a power flow among the converters within the photovoltaic power generation system. However, calculation for determining the charging-discharging priority between the DC-to-DC converter and the energy storage converter can be accomplished only by obtaining the voltage of the DC bus and a real-time SOC value of the energy storage battery, featuring a small calculation amount, low requirements for the controller, and a significantly faster processing response speed compared with the prior art.

In addition, the charging-discharging control method for the photovoltaic power generation system in this embodiment may be directly performed by the DC-to-DC converter, the energy storage converter, the photovoltaic converter or a controller in the grid-connected converter, without an additional EMS energy management device, thus effectively saving the device costs. Also, a control instruction is directly issued after calculation to enable the DC-to-DC converter and the energy storage converter to operate at an obtained target charging/discharging power, improving the response speed.

The charging-discharging control method for the photovoltaic power generation system is described in this embodiment. The method includes the following operations: performing initial setting on a state-of-charge (SOC) reference value of the energy storage battery, and determining a base voltage based on a minimum DC bus voltage required for charging the DC-to-DC converter and the energy storage converter, where the minimum DC bus voltage value is a sum of a minimum voltage required for charging the DC-to-DC converter and a minimum voltage required for charging the energy storage converter; determining, based on the base voltage, a bus voltage reference upper limit value of the DC-to-DC converter, a bus voltage reference value of the energy storage converter, and a bus voltage reference lower limit value of the DC-to-DC converter; and collecting a voltage of the DC bus as a DC bus voltage value, collecting a real-time SOC value of the energy storage battery, and comparing the DC bus voltage value with the bus voltage reference upper limit value of the DC-to-DC converter and the bus voltage reference lower limit value of the DC-to-DC converter, to determine the charging-discharging state of the DC-to-DC converter, and calculate the charging-discharging power of the DC-to-DC converter based on the SOC reference value and the real-time SOC value; and calculating the charging-discharging power of the energy storage power based on the DC bus voltage value and the bus voltage reference value of the energy storage converter.

In a process of determining, based on the base voltage, the bus voltage reference upper limit value of the DC-to-DC converter, the bus voltage reference value of the energy storage converter, and the bus voltage reference lower limit value of the DC-to-DC converter, different positive constants ***Δu*** are added to the base voltage, to determine the bus voltage reference upper limit value of the DC-to-DC converter, the bus voltage reference value of the energy storage converter, and the bus voltage reference lower limit value of the DC-to-DC converter. The bus voltage reference upper limit value of the DC-to-DC converter is greater than the bus voltage reference value of the energy storage converter, and the bus voltage reference value of the energy storage converter is greater than the bus voltage reference lower limit value of the DC-to-DC converter.

Bus voltage reference values applicable to the DC-to-DC converter and the energy storage converter are generated based on the base voltage ***BaseBus**,* as follows: $EvdcBus RefH = BaseBus + Δ {u}_{1} ,$ $PackBus Ref = BaseBus + Δ {u}_{2} ,$ and $EvdcBus RefL = BaseBus + Δ {u}_{3} ,$ where
*EvdcBusRefH* is a bus voltage reference upper limit value of an internal DC bus of the DC-to-DC converter, i.e., the bus voltage reference upper limit value of the DC-to-DC converter;
*PackBus*Ref is a bus voltage reference value of an internal DC bus of the energy storage converter, i.e., the bus voltage reference value of the energy storage converter; and
*EvdcBus*RefL is a bus voltage reference lower limit of the internal DC bus of the DC-to-DC converter, i.e., the bus voltage reference lower limit value of the DC-to-DC converter;

The bus voltage reference values of the DC-to-DC converter and the energy storage converter have a fixed relative relationship, and satisfies: *Δu*1 > *Δu*2 > *Δu*3 > 0 .

In this way, the obtained bus voltage reference upper limit value of the DC-to-DC converter is greater than the bus voltage reference value of the energy storage converter, and the bus voltage reference value of the energy storage converter is greater than the bus voltage reference lower limit value of the DC-to-DC converter.

In addition, each of the positive constants ***Δu*** (***Δu*1*, Δu*2*, Δu*3** ) in the above formulas is a constant between a minimum allowable voltage value and a maximum allowable voltage value of the DC bus. The positive constant ***Δu*** is jointly determined based on a voltage ripple of the DC bus and a voltage sampling tolerance of each converter in the photovoltaic power generation system.

In some embodiments, the comparing the DC bus voltage value with the bus voltage reference upper limit value of the DC-to-DC converter and the bus voltage reference lower limit value of the DC-to-DC converter to determine the charging-discharging state of the DC-to-DC converter may include the following conditions.

When the DC bus voltage value is higher than the bus voltage reference upper limit value of the DC-to-DC converter, it is determined that the DC-to-DC converter forcibly performs a charging operation. In an embodiment, the DC-to-DC converter forcibly performs the charging operation at a maximum charging power of the DC-to-DC converter, and the energy storage converter performs a charging operation at a maximum charging power of the energy storage converter.

When the DC bus voltage value is lower than the bus voltage reference lower limit value of the DC-to-DC converter, it is determined that the DC-to-DC converter forcibly performs a discharging operation. In an embodiment, the DC-to-DC converter performs the discharging operation at a maximum discharging power of the DC-to-DC converter, and the energy storage converter performs a discharging operation at a maximum discharging power of the energy storage converter.

When the DC bus voltage value is between the bus voltage reference upper limit value of the DC-to-DC converter and the bus voltage reference lower limit value of the DC-to-DC converter, it is determined that the DC-to-DC converter performs the charging operation or the discharging operation.

In a further embodiment, when the DC bus voltage value is between the bus voltage reference upper limit value of the DC-to-DC converter and the bus voltage reference lower limit value of the DC-to-DC converter, the charging-discharging power of the DC-to-DC converter i.e., the charging-discharging state of the DC-DC converter may be determined by comparing the SOC reference value with the real-time SOC value.

As illustrated in FIG. 8, the calculating the charging-discharging power of the DC-to-DC converter based on the SOC reference value and the real-time SOC value includes: calculating an intermediate value ***P_{soc}*** of the charging-discharging power of the DC-to-DC converter related to the real-time SOC value ***BatSoc*** of the energy storage battery through the regulator by using the SOC reference value ***BatSoc_ref*** as an input and the real-time SOC value ***BatSoc*** as a feedback; and performing amplitude limiting processing on the intermediate value ***P_{soc}*** of the charging-discharging power of the DC-to-DC converter to obtain the charging-discharging power ***P_{ev_cmd}*** of the DC-to-DC converter. The amplitude limiting processing performed herein is amplitude limiting processing for a power loop of the DC-to-DC converter. A charging power direction of the DC-to-DC converter is defined as a positive direction, and a discharging power direction is defined as a negative direction. The maximum charging power of the DC-to-DC converter is ***P_{ev_charge_max}**,* and the maximum discharging power is ***P_{ev_discharge_max}**.* The charging-discharging power ***P_{ev_cmd}*** of the DC-to-DC converter shall be within a range of [*-**P_{ev_discharge_max},P_{ev_charge_max}***]*.* That is, the intermediate value ***P_{soc}*** of the charging-discharging power of the DC-to-DC converter is limited to the range of **[*-P_{ev_discharge_max},P_{ev_charge_max}*]** to obtain the charging-discharging power ***P_{ev_cmd}*** of the DC-to-DC converter.

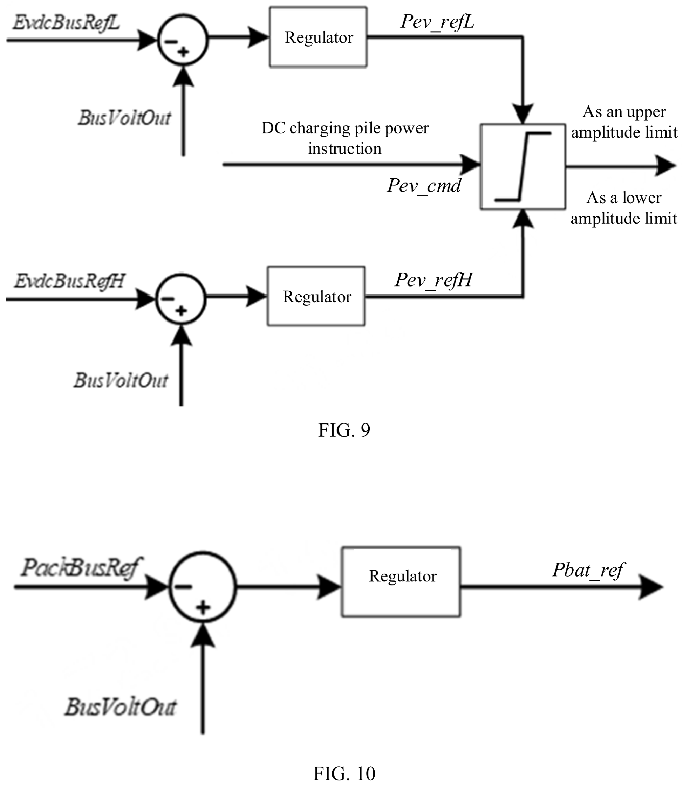

In addition, the amplitude limiting processing is performed on the charging-discharging power of the DC-to-DC converter through an amplitude limiter. An upper amplitude limit and a lower amplitude limit of the amplitude limiter are determined based on control of an upper limit output power and a lower limit output power of a voltage loop of the DC-to-DC converter. The voltage loop of the DC-to-DC converter includes an upper voltage limit loop and a lower voltage limit loop as illustrated in in FIG. 9. The upper voltage limit loop output power reference value of the DC-to-DC converter falls within the range of **[*-P_{ev_discharge_max},P_{ev_charge_max}*]*,*** and a lower voltage limit loop output power reference value of the DC-to-DC converter also falls within the range of **[*-P_{ev_discharge_max},P_{ev_charge_max}*]*.*** The obtained upper voltage limit loop output power reference value of the DC-to-DC converter is determined as the upper amplitude limit ***P**_{**ev**_}**_{refH},*** and the lower voltage limit loop output power reference value of the DC-to-DC converter is determined as the lower amplitude limit ***P_{ev_refL}.*** The obtained charging-discharging power ***P_{ev_cmd}*** is processed through the amplitude limiter (with a amplitude limiting range of **[*P_{ev_refL},P_{ev_refH}*]*,*** to obtain a final power reference value ***P_{ev_ref}*** of the DC-to-DC converter. The DC-to-DC converter performs power adjustment based on ***P_{ev_ref}.***

When the SOC reference value of the energy storage battery is smaller than the real-time SOC value of the energy storage battery, ***P_{ev_cmd}*** is positive, the DC-to-DC converter takes priority in charging, and the energy storage converter takes priority in discharging. When the SOC reference value of the energy storage battery is greater than the real-time SOC value of the energy storage battery, ***P_{ev_cmd}*** is negative, the DC-to-DC converter takes priority in discharging, and the energy storage converter takes priority in charging. When the SOC reference value of the energy storage battery is equal to the real-time SOC value of the energy storage battery, ***P_{ev_cmd}*** is 0, the DC charging pile performs charging only when there is surplus photovoltaic power, and performs discharging when there is a power deficit on the DC bus.

In summary, when the SOC reference value is smaller than the real-time SOC value, the DC-to-DC converter performs charging prior to the energy storage converter; when the SOC reference value is greater than the real-time SOC value, the DC-to-DC converter performs discharging prior to the energy storage converter; when the SOC reference value is equal to the real-time SOC value, the DC-to-DC converter performs charging or discharging based on an energy surplus or an energy deficit on the DC bus; the DC-to-DC converter performs charging only when there is surplus photovoltaic power, and performs discharging when there is a power deficit on the DC bus; otherwise, the DC-to-DC converter performs charging or discharging prior to the energy storage converter
The SOC reference value may be adjusted based on application requirements of the photovoltaic power generation system, and may be set to a value ranging from 0 to 100. When the SOC reference value is smaller than the real-time SOC value, it is indicated that the energy storage battery is above the set SOC reference value and has sufficient power, so that the DC-to-DC converter performs charging prior to the energy storage converter. When the SOC reference value is greater than the real-time SOC value, the energy storage battery has insufficient power, and thus the DC-to-DC converter performs discharging prior to the energy storage converter.

In an exemplary embodiment of the present disclosure, when the SOC reference value of the energy storage battery is constantly 0, such operating condition is defined as a "DC-to-DC converter priority charging mode", where ***P_{ev_cmd}*** is constantly positive and the DC-to-DC converter takes priority in charging. When the SOC reference value of the energy storage battery is constantly 100, such operating condition is defined as an "energy storage converter priority charging mode", where ***P_{ev_cmd}*** is constantly negative and the energy storage converter takes priority in charging.

A charging-discharging state and a charging-discharging power of the energy storage converter are determined based on the DC bus voltage value and the bus voltage reference value of the energy storage converter. As illustrated in FIG. 10, the charging-discharging power ***P_{bat_ref}*** of the energy storage converter is calculated through the regulator by using the bus voltage reference value ***PackBusRef*** of the energy storage converter as an input, and the DC bus voltage value ***BusVoltOut*** as a feedback. When the bus voltage reference value of the energy storage converter is greater than the feedback DC bus voltage value, a voltage loop output of the energy storage converter increases, which is reflected as an increase in the charging power to a bus capacitor or a decrease in the discharging power. When the bus voltage reference value of the energy storage converter is smaller than the feedback DC bus voltage value, the voltage loop output decreases, which is reflected as a decrease in the charging power to the bus capacitor or an increase in the discharging power.

In addition, the maximum charging power of the energy storage converter is ***P_{bat_charge_max},*** and the maximum discharging power is ***P_{bat_discharge_max}.*** The charging power direction of the DC-to-DC converter is defined as the positive direction, and the discharging power direction as the negative direction. An output power ***P_{bat_ref}*** of the energy storage converter is limited within a range of **[*-P_{bat_discharge_max},P_{bat_charge_max}*]*.***

In an embodiment, when the DC bus voltage value is equal to the bus voltage reference value of the energy storage converter, it is determined that the energy storage converter performs a charging operation or a discharging operation. When the DC bus voltage value is greater than the bus voltage reference value of the energy storage converter, it is determined that the energy storage converter performs charging. When the DC bus voltage value is smaller than the bus voltage reference value of the energy storage converter, it is determined that the energy storage converter performs discharging.

The control logic of the charging-discharging control method for the photovoltaic power generation system of the present disclosure is described below with reference to several operating condition examples.

For the photovoltaic power generation system as illustrated in FIG. 7, an operating state of the photovoltaic power generation system is adjusted based on a relationship between the DC bus voltage value, the bus voltage reference value of the DC-to-DC converter, and the bus voltage reference value of the energy storage converter in the photovoltaic power generation system, as well as the setting of the SOC reference value of the energy storage battery. A direction of power generated by the photovoltaic converter is defined as the positive direction, and a direction in which the grid-connected converter draws power from a DC capacitor bus and outputs the power is defined as the positive direction.

Operating Condition 1: the DC bus voltage value is higher than the bus voltage reference upper limit value of the DC-to-DC converter.

In this case, a photovoltaic power is greater than a sum of the maximum charging power of the DC-to-DC converter, the maximum charging power of the energy storage converter, and an alternating-current output power of the grid-connected converter.

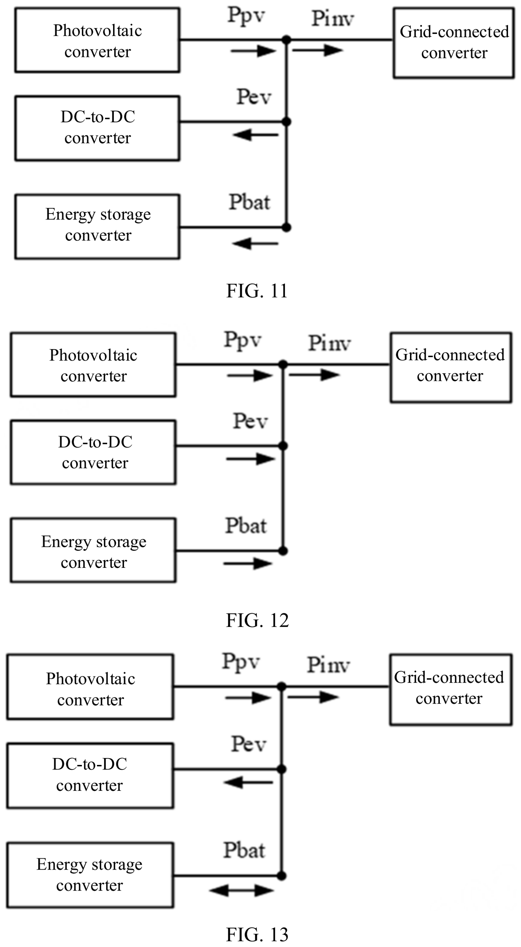

In this case, an output of an upper bus voltage limit loop of the DC-to-DC converter is ***P_{ev_charge_max},*** and an output of a lower bus voltage limit loop of the DC-to-DC converter is ***P_{ev_charge_max}.*** Regardless of the magnitude of ***P_{ev_cmd}*** generated based on a DC-to-DC converter power instruction, a final obtained charging power of the DC-to-DC converter is limited at ***P_{ev_charge_max}.*** In other words, the DC-to-DC converter performs charging at the maximum charging power of the DC-to-DC converter, and the energy storage converter performs charging at the maximum charging power of the energy storage converter. An energy flow relationship of the photovoltaic power generation system is illustrated in FIG. 11, where the bus voltage and power relationships are shown in Table 1 below.

**Table 1: Bus Voltage and Power Relationship under Operating Condition 1**

| Bus voltage relationship | *Bus Volt > EvdcBus Re fH* |
|---|---|
| Power relationship | *Pₚᵥ* > *P_{ev_charge_max} + P_{bat_charge_max} + Pᵢₙᵥ* |
| Energy storage power | *P_{bat}* = *P_{bat_charge_max}* |
| Charging pile power | *Pₑᵥ = P_{ev_charge_max}* |

Operating Condition 2: the DC bus voltage value is lower than the bus voltage reference lower limit value of the DC-to-DC converter.

In this case, a sum of the photovoltaic power, the maximum discharging power of the DC-to-DC converter, and the maximum discharging power of the energy storage converter is smaller than the output power of the grid-connected converter.

In this case, the output of the upper bus voltage limit loop of the DC-to-DC converter is ***-P_{ev_discharge_max},*** and the output of the lower bus voltage limit loop of the DC-to-DC converter is ***-P_{ev_discharge_max}.*** Regardless of the magnitude of ***P_{ev_cmd}*** generated based on the DC-to-DC converter power instruction, a final obtained discharging power of the DC-to-DC converter is limited at ***-P_{ev_discharge_max}.*** In other words, the DC-to-DC converter performs discharging at a maximum power, and the energy storage converter performs discharging at the maximum power. An energy flow relationship of the photovoltaic power generation system is illustrated in FIG. 12, where the bus voltage and power relationships are shown in Table 2 below.

**Table 2: Bus Voltage and Power Relationship under Operating Condition 2**

| Bus voltage relationship | *EvdcBus Re fL* ≥ *BusVolt* |
|---|---|
| Power relationship | *Pₚᵥ + P_{ev_discharge_max} + P_{bat_discharge_maX} < Pᵢₙᵥ* |
| Energy storage power | *P_{bat}* = *-P_{bat_discharge_max}* |
| Charging pile power | *Pₑᵥ* = *-P_{ev_discharge_max}* |

Operating Condition 3-1: the DC bus voltage value is equal to the voltage reference value of the energy storage converter, and the SOC reference value of the energy storage battery is smaller than the current real-time SOC value of the energy storage battery.

In this case, the photovoltaic power is smaller than the sum of the maximum charging power of the DC-to-DC converter, the maximum charging power of the energy storage converter, and the AC output power of the grid-connected converter, and a sum of the photovoltaic power and the maximum discharging power of the energy storage converter is greater than a sum of the maximum charging power of the DC-to-DC converter and the AC output power of the grid-connected converter.

In this case, the output of the upper bus voltage limit loop of the DC-to-DC converter is ***-P_{ev_discharge_max},*** and the output of the lower bus voltage limit loop of the DC-to-DC converter is ***P_{ev_charge_max}. P_{ev_cmd=}P_{ev_charge_max}*** is generated based on the DC-to-DC converter power instruction, and a final charging power of the DC-to-DC converter is ***P_{ev_charge_max}.*** The DC-to-DC converter performs charging at the maximum charging power of the DC-to-DC converter, while the energy storage converter may either perform charging or perform discharging. When the photovoltaic power is greater than the sum of the maximum charging power of the DC-to-DC converter and the AC output power of the grid-connected converter, ***P_{bat}*** is in the positive direction and the energy storage converter performs charging. When the photovoltaic power is smaller than the sum of the maximum charging power of the DC-to-DC converter and the AC output power of the grid-connected converter, ***P_{bat}*** is in the negative direction and the energy storage converter performs discharging. An energy flow relationship of the photovoltaic power generation system is illustrated in FIG. 13, where the bus voltage and power relationships are shown in Table 3-1 below.

**Table 3-1: Bus Voltage and Power Relationship under Operating Condition 3-1**

| Bus voltage relationship | *PackBus Re f = BusVolt* |
|---|---|
| SOC relationship | *BatSoc_*Ref *< BatSoc* |
| Power relationship | *P_{ev_charge_max} + P_{bat_charge_max} + Pᵢₙᵥ* > *Pₚᵥ* |
| | *Pₚᵥ* + *P*_{*bat*_*discharge_max*} > *P_{ev_chargemax} + Pᵢₙᵥ* |
| Energy storage power | *P_{bat}* = *Pₚᵥ* - *P_{ev_chargemax}* - *Pᵢₙᵥ* |
| Charging pile power | *Pₑᵥ* = *P_{ev_charge_max}* |

Operating Condition 3-2: the DC bus voltage value is equal to the voltage reference value of the energy storage converter, and the SOC reference value of the energy storage battery is greater than the current SOC of the energy storage battery
In this case, a sum of the photovoltaic power and the maximum discharging power of the DC-to-DC converter is smaller than a sum of the maximum charging power of the energy storage converter and the AC output power of the grid-connected converter, and a sum of the photovoltaic power, the maximum discharging power of the DC-to-DC converter, and the maximum discharging power of the energy storage converter is greater than the AC output power of the grid-connected converter.

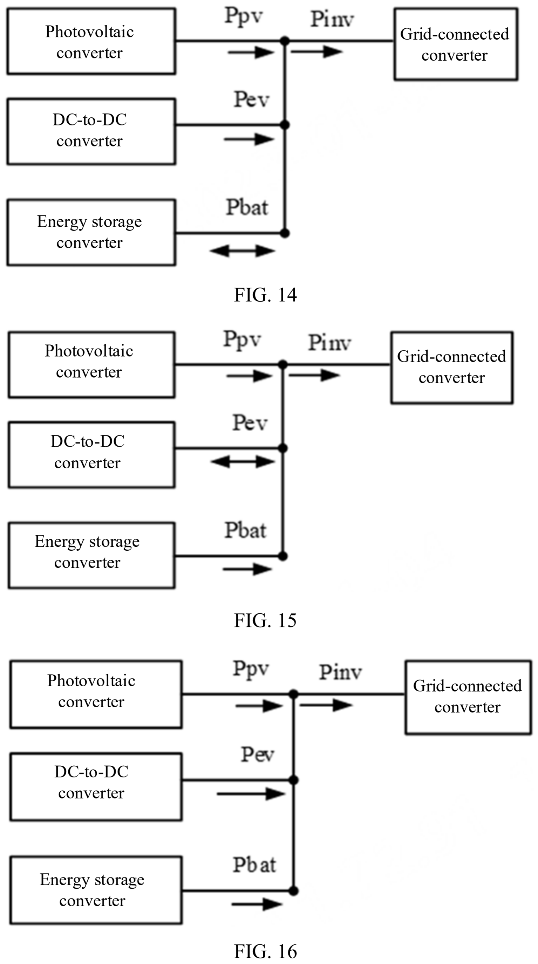

In this case, the output of the upper bus voltage limit loop of the DC-to-DC converter is ***-P_{ev_discharge_max},*** and the output of the lower bus voltage limit loop of the DC-to-DC converter is ***P_{ev_charge_max}. P*_{*ev_cmd*=}*-P_{ev_discharge_max}*** is generated based on the DC-to-DC converter power instruction, and a final discharging power of the DC-to-DC converter is ***-P_{ev_discharge_max}.*** The DC-to-DC converter performs discharging at the maximum discharging power of the DC-to-DC converter, while the energy storage converter may either perform charging or perform discharging. When the photovoltaic power and the discharging power of the DC-to-DC converter are greater than the AC output power of the grid-connected converter, ***P_{bat}*** is positive, and the energy storage converter performs charging. When the photovoltaic power and the discharging power of the DC-to-DC converter are smaller than the AC output power of the grid-connected converter, ***P_{bat}*** is negative, and the energy storage converter performs discharging. An energy flow relationship of the photovoltaic power generation system is illustrated in FIG. 14, where the bus voltage and power relationships are shown in Table 3-2 below.

**Table 3-2: Bus Voltage and Power Relationship under Operating Condition 3-2**

| Bus voltage relationship | *PackBus Re f = BusVolt* |
|---|---|
| SOC relationship | *BatSoc_Ref > BatSoc* |
| Power relationship | *P_{bat_charge_max} + Pᵢₙᵥ* > *Pₚᵥ + P_{ev_discharge_max}* |
| | *Pₚᵥ + _{bat_discharge_max} + P_{ev_dischargemax} > Pᵢₙᵥ* |
| Energy storage power | *P_{bat} = Pₚᵥ + P_{ev_dischargemax}* - *Pᵢₙᵥ* |
| Charging pile power | *Pₑᵥ* = *-P_{ev_discharge_maX}* |

Operating Condition 4-1: the DC bus voltage value is equal to the bus voltage reference lower limit value of the DC-to-DC converter, and the SOC reference value of the energy storage battery is smaller than the current SOC of the energy storage battery.

In this case, the sum of the photovoltaic power and the maximum discharging power of the energy storage converter is smaller than a sum of the AC output power of the grid-connected converter and the maximum charging power of the DC-to-DC converter, and the sum of the photovoltaic power, the maximum discharging power of the DC-to-DC converter, and the maximum discharging power of the energy storage converter is greater than the AC output power of the grid-connected converter.

In this case, the output of the upper bus voltage limit loop of the DC-to-DC converter is ***-P_{ev_discharge_max},*** and the output of the lower bus voltage limit loop of the DC-to-DC converter is in a range of **[*-P_{ev_discharge_max},P_{ev_charge_max}*]*. P_{ev_cmd=}P_{ev_charge_max}*** is generated based on the DC-to-DC converter power instruction, and the final power reference value of the DC-to-DC converter is ***P_{ev_ref=}P_{ev_refL}.***

The energy storage converter performs discharging at the maximum discharging power of the energy storage converter. The DC-to-DC converter may either perform charging or perform discharging. When the sum of the photovoltaic power and the maximum discharging power of the energy storage converter is greater than the AC output power of the grid-connected converter, ***Pₑᵥ*** is positive, and the DC-to-DC converter performs charging. When the sum of the photovoltaic power and the maximum discharging power of the energy storage converter is smaller than the ac output power of the grid-connected converter, ***Pₑᵥ*** is negative, and the DC-to-DC converter performs discharging. An energy flow relationship of the photovoltaic power generation system is illustrated in FIG. 15, where the bus voltage and power relationships are shown in Table 4-1 below.

**Table 4-1: Bus Voltage and Power Relationship under Operating Condition 4-1**

| Bus voltage relationship | *EvdcBus Re fL = BusVolt* |
|---|---|
| SOC relationship | *BatSoc_*Ref *< BatSoc* |
| Power relationship | *P_{ev_charge_max} + Pᵢₙᵥ* > *Pₚᵥ + P_{bat_discharge_max}* |
| | *Pₚᵥ + P_{bat_discharge_max} + P_{ev_discharge_max}* > *Pᵢₙᵥ* |
| Energy storage power | *P_{bat}* = *-P_{bat_discharge_max}* |
| Charging pile power | *Pₑᵥ* = *Pₚᵥ + P_{bat_discharge_max} - Pᵢₙᵥ* |

Operating Condition 4-2: the DC bus voltage value is equal to the bus voltage reference lower limit value of the DC-to-DC converter, and the SOC reference value of the energy storage battery is greater than the current SOC of the energy storage battery.

In this case, the sum of the photovoltaic power, the maximum discharging power of the DC-to-DC converter, and the maximum discharging power of the energy storage converter is equal to the AC output power of the grid-connected converter.

In this case, the output of the upper bus voltage limit loop of the DC-to-DC converter is ***-P_{ev_discharge_max},*** and the output of the lower bus voltage limit loop of the DC-to-DC converter is in a range of **[*-P_{ev_discharge_max},P_{ev_charge_max}*]*. P_{ev_cmd=}-P_{ev_discharge_max}*** is generated based on the DC-to-DC converter power instruction, and the final power reference value of the DC-to-DC converter is ***P_{ev_ref=}-P_{ev_discharge_max}.*** The energy storage converter performs discharging at the maximum discharging power of the energy storage converter. An energy flow relationship of the photovoltaic power generation system is illustrated in FIG. 16, where the bus voltage and power relationships are shown in Table 4-2 below.

**Table 4-2: Bus Voltage and Power Relationship under Operating Condition 4-2**

| Bus voltage relationship | *EudcBus Re fL = BusVolt* |
|---|---|
| SOC relationship | *BatSoc_Ref > BatSoc* |
| Power relationship | *Pₚᵥ + P_{bat_discharge_max} + P_{ev_discharge_max}* = *Pᵢₙᵥ* |
| Energy storage power | *P_{bat}* = *-P_{bat_discharge_max}* |
| Charging pile power | *Pₑᵥ* = *-P_{ev_discharge_max}* |

Operating Condition 5-1: the DC bus voltage value is equal to the bus voltage reference upper limit value of the DC-to-DC converter, and the SOC reference value of the energy storage battery is smaller than the current SOC of the energy storage battery.

In this case, the photovoltaic power is equal to the sum of the maximum charging power of the DC-to-DC converter, the maximum charging power of the energy storage converter, and the AC output power of the grid-connected converter.

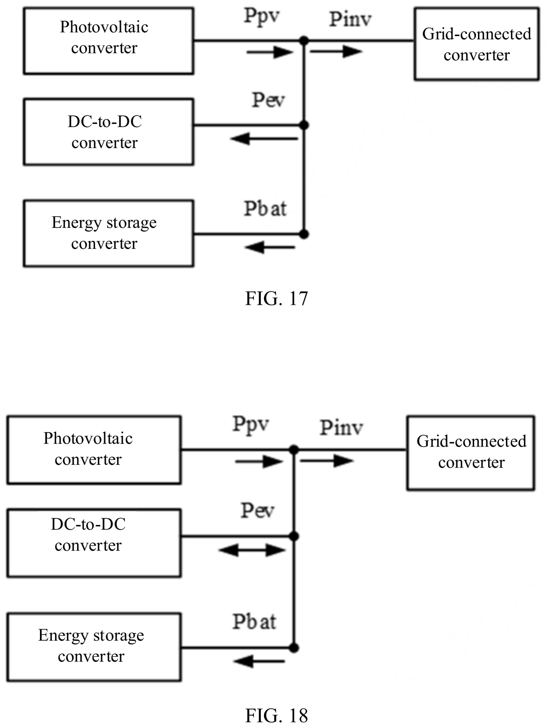

In this case, the output of the upper bus voltage limit loop of the DC-to-DC converter is in the range of **[*-P_{ev_discharge_max},P_{ev_charge_max}*]*,*** and the output of the lower bus voltage limit loop of the DC-to-DC converter is ***P_{ev_charge_max}. P_{ev_cmd=}P_{ev_charge_max}*** is generated based on the DC-to-DC converter power instruction, and the final power reference value of the DC-to-DC converter is ***P_{ev_ref=}P_{ev_charge_max}.*** The energy storage converter performs charging at the maximum charging power, and the DC-to-DC converter performs charging at the maximum charging power. An energy flow relationship of the photovoltaic power generation system is illustrated in FIG. 17, where the bus voltage and power relationships are shown in Table 5-1 below.

**Table 5-1: Bus Voltage and Power Relationship under Operating Condition 5-1**

| Bus voltage relationship | *EvdcBusRefH = BusVolt* |
|---|---|
| SOC relationship | *BatSoc_Ref < BatSoc* |
| Power relationship | *Pᵢₙᵥ + P_{bat_charge_max} + P_{ev_chargemax}* = *Pₚᵥ* |
| Energy storage power | ***P**_{bat}* = *P_{bat_chargemax}* |
| Charging pile power | *Pₑᵥ* = *P*_{*ev_ch*arg*e*_max} |

Operating Condition 5-2: the DC bus voltage value is equal to the bus voltage reference upper limit value of the DC-to-DC converter, and the SOC reference value of the energy storage battery is greater than the current SOC of the energy storage battery.

In this case, the sum of the photovoltaic power and the maximum discharging power of the DC-to-DC converter is greater than the sum of the maximum charging power of the energy storage converter and the AC output power of the grid-connected converter, and the photovoltaic power is smaller than the sum of the maximum charging power of the DC-to-DC converter, the maximum charging power of the energy storage converter, and the AC output power of the grid-connected converter.

In this case, the output of the upper bus voltage limit loop of the DC-to-DC converter is in the range of **[*-P_{ev_discharge_max},P_{ev_charge_max}*]*,*** and the output of the lower bus voltage limit loop of the DC-to-DC converter is ***P_{ev_charge_max}. P_{ev_cmd=}-P_{ev_discharge_max}*** is generated based on the DC-to-DC converter power instruction, and the final power reference value of the DC-to-DC converter is ***P_{ev_ref=}P_{ev_refH}.*** The energy storage converter performs charging at the maximum charging power. The DC-to-DC converter may either perform charging or perform discharging. When the photovoltaic power is greater than the sum of the maximum charging power of the energy storage converter and the AC output power of the grid-connected converter, ***Pₑᵥ*** is positive, and the DC-to-DC converter performs charging. When the photovoltaic power is smaller than the sum of the maximum charging power of the energy storage converter and the AC output power of the grid-connected converter, ***Pₑᵥ*** is negative, and the DC-to-DC converter performs discharging. An energy flow relationship of the photovoltaic power generation system is illustrated in FIG. 18, where the bus voltage and power relationships are shown in Table 5-2 below.

**Table 5-2: Bus Voltage and Power Relationship under Operating Condition 5-2**

| Bus voltage relationship | *EvdcBusRefH = Bus Volt* |
|---|---|
| SOC relationship | *BatSoc_*Ref *> BatSoc* |
| Power relationship | *Pₚᵥ + P_{ev_discharge_max}* > *Pᵢₙᵥ + P_{bat_charge_max}* |
| | *Pᵢₙᵥ + P_{bat_charge_max} + P_{ev_chargemax}* > *Pₚᵥ* |
| Energy storage power | *P_{bat}* = *P_{bat_chargemax}* |
| Charging pile power | *Pₑᵥ* = *Pₚᵥ* - *P_{bat_charge_max} - Pᵢₙᵥ* |

In summary, with the charging-discharging control method of the present disclosure, the bus voltage reference values for the DC-to-DC converter and the energy storage converter are generated based on bus voltage requirements of the DC-to-DC converter and the energy storage converter in the photovoltaic power generation system during operation. In combination with real-time detection of the voltage value of the DC bus, the charging-discharging state of the DC-to-DC converter is determined subsequent to comparison. In this way, charging-discharging stability of the DC-to-DC converter is ensured while improving the response speed of the DC-to-DC converter, thus effectively avoiding an impact of photovoltaic and load disturbances. In addition, the charging-discharging control method of the present disclosure may be directly performed by the controller in the DC-to-DC converter, the energy storage converter, the photovoltaic converter, or the grid-connected converter, without an additional EMS energy management device, thus effectively saving the device costs. Also, the control instruction is issued directly after calculation to enable the DC-to-DC converter and the energy storage converter to operate at the obtained target charging-discharging power, improving the response speed.

The above embodiments are only for illustrating technical ideas and features of the present disclosure, intended to enable those skilled in the art to understand the content of the present disclosure and implement accordingly, and shall not be used to limit the protection scope of the present disclosure. All equivalent changes or modifications made in accordance with the spiritual essence of the present disclosure shall fall within the protection scope of the present disclosure.

## Claims

1. A charging and discharging power regulation method, wherein a power battery is connected to a power grid via a direct-current (DC)-to-DC converter and a grid-connected converter, the DC-to-DC converter is connected to the grid-connected converter through a DC bus, the grid-connected converter is connected to the power grid at a grid connection point, and an alternating-current (AC) load is connected to the grid connection point; wherein the charging and discharging power regulation method comprises:
determining a charging-discharging state of the DC-to-DC converter;
comparing, when the DC-to-DC converter is in a charging state, a sum of a charging power of the DC-to-DC converter and an operating power of the AC load with an input power limit value of the grid connection point, and adjusting an output power reference value of the grid-connected converter and an output power reference value of the DC-to-DC converter based on a comparison result; and
comparing, when the DC-to-DC converter is in a discharging state, a difference between a discharging power of the DC-to-DC converter and the operating power of the AC load with an output power limit value of the grid connection point, and adjusting the output power reference value of the DC-to-DC converter and the output power reference value of the grid-connected converter based on a comparison result.

2. The charging and discharging power regulation method according to claim 1, comprising, when the DC-to-DC converter is in the charging state: in response to the sum of the charging power of the DC-to-DC converter and the operating power of the AC load being greater than the input power limit value of the grid connection point, inputting a difference between the input power limit value of the grid connection point and a real-time power of the grid connection point into a regulator to calculate the output power reference value of the grid-connected converter; and inputting a difference between a bus voltage reference value of the DC-to-DC converter and a real-time voltage of the DC bus into the regulator to calculate the output power reference value of the DC-to-DC converter; or
when the DC-to-DC converter is in the charging state: in response to the sum of the charging power of the DC-to-DC converter and the operating power of the AC load being smaller than the input power limit value of the grid connection point, inputting a difference between a bus voltage reference value of the grid-connected converter and a real-time voltage of the DC bus into a regulator to calculate the output power reference value of the grid-connected converter; and controlling the DC-to-DC converter to adjust operation of the DC-to-DC converter by using a charging power limit value of the DC-to-DC converter as the output power reference value of the DC-to-DC converter; or
when the DC-to-DC converter is in the discharging state: in response to the difference between the discharging power of the DC-to-DC converter and the operating power of the AC load being greater than the output power limit value of the grid connection point, inputting a difference between the output power limit value of the grid connection point and a real-time power of the grid connection point into a regulator to calculate the output power reference value of the grid-connected converter; and inputting a difference between a bus voltage reference value of the DC-to-DC converter and a real-time voltage of the DC bus into the regulator to calculate the output power reference value of the DC-to-DC converter; or
when the DC-to-DC converter is in the discharging state: in response to the difference between the discharging power of the DC-to-DC converter and the operating power of the AC load being smaller than the output power limit value of the grid connection point, inputting a difference between a bus voltage reference value of the grid-connected converter and a real-time voltage of the DC bus into a regulator to calculate the output power reference value of the grid-connected converter; and controlling the DC-to-DC converter to adjust operation of the DC-to-DC converter by using a discharging power limit value of the DC-to-DC converter as an output power of the DC-to-DC converter.

3. The charging and discharging power regulation method according to claim 1, wherein an energy storage battery is connected to the DC bus at a DC side of the grid-connected converter via an energy storage converter, and the charging and discharging power regulation method comprises:
performing initial setting on a state-of-charge (SOC) reference value of the energy storage battery, and determining a base voltage based on a minimum DC bus voltage required for charging the DC-to-DC converter and the energy storage converter;
determining, based on the base voltage, a bus voltage reference upper limit value of the DC-to-DC converter, a bus voltage reference value of the energy storage converter, and a bus voltage reference lower limit value of the DC-to-DC converter; and
collecting a voltage of the DC bus as a DC bus voltage value, collecting a real-time SOC value of the energy storage battery, and comparing the DC bus voltage value with the bus voltage reference upper limit value of the DC-to-DC converter and the bus voltage reference lower limit value of the DC-to-DC converter, to determine the charging-discharging state of the DC-to-DC converter.

4. The charging and discharging power regulation method according to claim 3, further comprising: adding different positive constants ***Δu*** to the base voltage, to determine the bus voltage reference upper limit value of the DC-to-DC converter, the bus voltage reference value of the energy storage converter, and the bus voltage reference lower limit value of the DC-to-DC converter, wherein the bus voltage reference upper limit value of the DC-to-DC converter is greater than the bus voltage reference value of the energy storage converter, and the bus voltage reference value of the energy storage converter is greater than the bus voltage reference lower limit value of the DC-to-DC converter.

5. The charging and discharging power regulation method according to claim 3, wherein the comparing the DC bus voltage value with the bus voltage reference upper limit value of the DC-to-DC converter and the bus voltage reference lower limit value of the DC-to-DC converter to determine the charging-discharging state of the DC-to-DC converter comprises:
when the DC bus voltage value is between the bus voltage reference upper limit value of the DC-to-DC converter and the bus voltage reference lower limit value of the DC-to-DC converter, determining that the DC-to-DC converter performs a charging operation or a discharging operation; or
when the DC bus voltage value is higher than the bus voltage reference upper limit value of the DC-to-DC converter, determining that the DC-to-DC converter performs a charging operation at a maximum charging power of the DC-to-DC converter, and the energy storage converter performs a charging operation at a maximum charging power of the energy storage converter; or
when the DC bus voltage value is lower than the bus voltage reference lower limit value of the DC-to-DC converter, determining that the DC-to-DC converter performs a discharging operation at a maximum discharging power of the DC-to-DC converter, and the energy storage converter performs a discharging operation at a maximum discharging power of the energy storage converter.

6. The charging and discharging power regulation method according to claim 5, wherein:
when the DC bus voltage value is between the bus voltage reference upper limit value of the DC-to-DC converter and the bus voltage reference lower limit value of the DC-to-DC converter, the charging-discharging state of the DC-to-DC converter is determined by comparing the SOC reference value with the real-time SOC value; wherein
when the SOC reference value is equal to the real-time SOC value, it is determined that the DC-to-DC converter performs charging or discharging based on an energy surplus or an energy deficit on the DC bus;
when the SOC reference value is not equal to the real-time SOC value, it is determined that the DC-to-DC converter performs charging or discharging prior to the energy storage converter.

7. The charging and discharging power regulation method according to claim 3, wherein a charging-discharging power of the DC-to-DC converter is calculated based on the SOC reference value and the real-time SOC value, wherein
the charging-discharging power of the DC-to-DC converter is calculated through a regulator, wherein an intermediate value of the charging-discharging power of the DC-to-DC converter is calculated by using the SOC reference value as an input to the regulator and the real-time SOC value as a feedback; and amplitude limiting processing is performed on the intermediate value of the charging-discharging power of the DC-to-DC converter to obtain the charging-discharging power of the DC-to-DC converter.

8. The charging and discharging power regulation method according to claim 7, wherein the amplitude limiting processing is performed on the charging-discharging power of the DC-to-DC converter through an amplitude limiter, and an upper amplitude limit and a lower amplitude limit of the amplitude limiter are determined by:
calculating an upper voltage limit loop output power reference value of the DC-to-DC converter by using the bus voltage reference upper limit value of the DC-to-DC converter as an input and the DC bus voltage value as a feedback, and determining the upper voltage limit loop output power reference value as the upper amplitude limit; or
calculating a lower voltage limit loop output power reference value of the DC-to-DC converter by using the bus voltage reference lower limit value of the DC-to-DC converter as an input and the DC bus voltage value as a feedback, and determining the lower voltage limit loop output power reference value as the lower amplitude limit.

9. The charging and discharging power regulation method according to claim 7, wherein a charging-discharging state of the energy storage converter is determined based on the DC bus voltage value and the bus voltage reference value of the energy storage converter, wherein it is determined that the energy storage converter performs a charging operation or a discharging operation when the DC bus voltage value is equal to the bus voltage reference value of the energy storage converter.

10. The charging and discharging power regulation method according to claim 9, wherein:
when the DC bus voltage value is greater than the bus voltage reference value of the energy storage converter, it is determined that the energy storage converter performs the charging operation; or
when the DC bus voltage value is smaller than the bus voltage reference value of the energy storage converter, it is determined that the energy storage converter performs the discharging operation.

11. The charging and discharging power regulation method according to claim 7, wherein a charging-discharging power of the energy storage converter is calculated based on the DC bus voltage value and the bus voltage reference value of the energy storage converter, wherein
the charging-discharging power of the energy storage converter is calculated through the regulator by using the bus voltage reference value of the energy storage converter as an input and the DC bus voltage value as a feedback.

12. A direct-current (DC)-to-DC converter system configured to perform the charging and discharging power regulation method according to any one of claims 1 to 11 to regulate a charging-discharging power between a power battery and a power grid.

13. The DC-to-DC converter system according to claim 12, comprising a DC-to-DC converter, a grid-connected converter, a controller, and a power metering device, wherein:
the power battery is connected to the power grid via the DC-to-DC converter and the grid-connected converter;
the DC-to-DC converter is connected to the grid-connected converter through a DC bus;
the grid-connected converter is connected to the power grid at a grid connection point, and an alternating-current (AC) load is connected to the grid connection point;
the power metering device has an input terminal connected to the grid connection point, and an output terminal connected to an input terminal of the controller; and
the controller is connected to the DC-to-DC converter and the grid-connected converter, and is configured to adjust an output power reference value of the DC-to-DC converter and an output power reference value of the grid-connected converter based on a charging-discharging state of the DC-to-DC converter and an input-output power of the grid connection point.

14. The DC-to-DC converter system according to claim 13, wherein the controller comprises a grid-connected converter control unit and a DC-to-DC converter control unit, wherein:
the grid-connected converter control unit is connected to the grid-connected converter; and
the DC-to-DC converter control unit is connected to the DC-to-DC converter.

15. The DC-to-DC converter system according to claim 14, wherein the grid-connected converter control unit comprises a grid-connected converter power upper limit control module, a grid-connected converter power lower limit control module, and a grid-connected converter bus voltage control module, wherein:
the grid-connected converter power upper limit control module is configured to input a difference between an output power limit value of the grid connection point and a real-time power of the grid connection point into a regulator, and obtain an output of the grid-connected converter power upper limit control module through the regulator;
the grid-connected converter power lower limit control module is configured to input a difference between an input power limit value of the grid connection point and the real-time power of the grid connection point into the regulator, and obtain an output of the grid-connected converter power lower limit control module through the regulator; and
the grid-connected converter bus voltage control module is configured to input a difference between a bus voltage reference value of the grid-connected converter and a real-time voltage of the DC bus into the regulator, and obtain an output of the grid-connected converter bus voltage control module through the regulator, wherein the output of the grid-connected converter bus voltage control module is subjected to amplitude limiting processing to generate an output power reference value for adjusting and controlling the grid-connected converter; or
the DC-to-DC converter bus voltage control module is configured to input a difference between a bus voltage reference value of the DC-to-DC converter and a real-time voltage of the DC bus into a regulator, and obtain an output of the DC-to-DC converter bus voltage control module through the regulator, wherein the output of the DC-to-DC converter bus voltage control module is subjected to amplitude limiting processing to generate an output power reference value for adjusting and controlling the DC-to-DC converter.
